# DEMANDE DE BREVET EUROPEEN

(11) **EP 1 632 849 A1**
(43) Date de publication de la demande: **08.03.2006**
(21) Numéro de dépôt: 04104303.5
(22) Date de dépôt: 07.09.2004
(51) Int. Cl.: G06F 9/44

(54) **système de développement d'une application embarquée dans un module**

(71) Demandeur: Nagracard S.A., 1033 Cheseaux-sur-Lausanne (CH)
(72) Inventeur: Blandin, Philippe, 1033, Cheseaux-sur-Lausanne (CH)
(74) Mandataire: Wenger, Joel-Théophile

(57) **Abrégé**

La présente invention propose un système de développement d'une application (APP) destinée à être embarquée dans un module, comprenant un module (MOD) de référence, une station de travail (WST) et un équipement mobile.

Le module (MOD) de référence comprend un ensemble logiciel de base (JCM), un module logiciel (TFW) spécifique au domaine de l'application (APP) et des interfaces (IN1), (IN2) reliant une image (APP-G) de l'application d'une part à l'ensemble logiciel de base (JCM) et d'autre part au module logiciel spécifique (TFW).

La station de travail (WST) comprend un logiciel de base S-JM universel dialoguant avec l'application (APP) via une interface (IN1) fournie par une librairie logicielle (JC-API).

Le système est caractérisé en ce que le module (MOD) comporte un module serveur (TEL-S) reliant le module logiciel spécifique (TFW) à un module client (TEL-C) de la station de travail (WST), ledit module logiciel spécifique (TFW) fournissant une interface (IN2) à l'application (APP) de la station de travail (WST) via le module serveur (TEL-S) et le module client (TEL-C). Il comprend également un équipement mobile (MOB) connecté à la station de travail (WST) via un module d'interface "proxy" (PR) connecté d'une part au logiciel de base (JCM) du module (MOD) et d'autre part à la librairie logicielle (JC-API) de la station de travail (WST), ladite librairie (JC-API) fournissant des fonctions propres au module (MOD) à l'application (APP).

## Description

### Domaine de l'invention

La présente invention concerne un système de développement de logiciels destinés à être embarqués dans un module. Ce dernier peut être un appareil autonome fonctionnant grâce à un processeur et à un logiciel stocké dans une mémoire ou une carte à puce avec ou sans contact à insérer dans un accepteur de cartes permettant le fonctionnement d'un appareil.

### Art antérieur

De nombreux modules possèdent des composants sécurisés et protégés, tels que des processeurs et des mémoires rendus inaccessibles soit matériellement, soit par logiciel. Une protection matérielle peut consister en un enrobage dans une résine par exemple, tandis qu'une protection logicielle peut être effectuée par des interfaces effectuant un codage ou un filtrage des entrées et des sorties des processeurs et des mémoires. Les programmes installés dans ces modules traitant en général des opérations de sécurité appartiennent à des fournisseurs qui possèdent des droits de propriété intellectuelle qui interdisent toute modification sans autorisation et sans l'acquisition d'une licence.

Il est donc important que ces programmes restent inaccessibles et protégés au niveau de leur code source. Seul un accès utilisateur à des fonctions et à des commandes conservant l'intégrité du programme, sera autorisé via une interface adéquate.

Ces types de modules agissent ainsi, en quelque sorte, comme des boîtes noires qui résistent à toute modification de leur configuration interne et dont seul le comportement à des commandes et instructions spécifiques introduites de l'extérieur est connu.

Le développement d'un logiciel d'application destiné à fonctionner sur des tels modules sécurisés s'effectue en général à l'aide d'un émulateur c'est-à-dire un dispositif qui simule le comportement des composants et des programmes inaccessibles du module sur une plate forme distincte dudit module.

Cette plate-forme peut être matérielle comprenant un circuit équivalent à celui formé par les composants et les programmes protégés du module pour lequel on désire développer un logiciel d'application.

L'émulateur peut aussi se constituer d'un logiciel chargé dans un ordinateur personnel qui simule le fonctionnement du programme protégé embarqué dans le module. Un tel système d'émulation est constitué généralement d'un logiciel de base sur lequel sont installés des outils de développement, un logiciel équivalent à celui du module et une application à développer. Le comportement de cette application dans l'émulateur devra être le plus proche possible, voire identique, de celui qu'elle aura une fois installée dans le module. Cette exigence nécessite une mise à jour régulière de l'émulateur ce qui engendre généralement des coûts très élevés. En effet, lorsque le logiciel protégé du module est modifié par son fournisseur, les mises à jour du logiciel simulant le module ainsi que celle du logiciel de développement deviennent indispensables.

### Buts de l'invention

Le but de la présente invention est de fournir un outil de développement d'une application tout en garantissant la sécurité des codes source des programmes protégés utilisés par l'application.

Un autre but est d'obtenir un système de développement dont la configuration permet de réduire au minimum la maintenance de ses composants tant au niveau matériel que logiciel.

### Description sommaire de l'invention

Ce but est atteint par un système de développement d'une application destinée à être embarquée dans un module, comprenant un module de référence et une station de travail, ledit module de référence comprend un ensemble logiciel de base, un module logiciel spécifique au domaine de l'application et des interfaces, reliant une image de l'application d'une part à l'ensemble logiciel de base et d'autre part au module logiciel spécifique, la station de travail comprend un logiciel de base universel dialoguant avec l'application via une interface fournie par une librairie logicielle, ledit système est caractérisé en ce que le module comporte un module serveur reliant le module logiciel spécifique à un module client de la station de travail, ledit module logiciel spécifique fournissant une interface à l'application de la station de travail via le module serveur et le module client et en ce qu'il comprend un équipement mobile connecté à la station de travail via un module d'interface "proxy" connecté d'une part au logiciel de base du module et d'autre part à la librairie logicielle de la station de travail, ladite librairie fournissant des fonctions propres au module à l'application .

Dans une variante préférée, le système de développement considéré sert à la création d'applications logicielles qui seront embarquées sur une carte à puce avec ou sans contact semblable au module de référence.

Une carte à puce aussi appelée "smartcard" ou carte intelligente comprend généralement un processeur central, un processeur cryptographique, un bus et divers types de mémoires tels qu'une mémoire ROM (Read Only Memory) ou mémoire non volatile en lecture seule contenant l'application initiale, une mémoire RAM (Random Access Memory) ou mémoire vive et une mémoire Flash ou EEPROM (Electrical Erasable Programmable ROM) ou mémoire non volatile réinscriptible. Grâce à ces composants, la carte à puce est programmable et peut ainsi effectuer divers traitements de données numériques.

Une application "carte" au sens large est constituée de l'ensemble formé par les programmes et les données de la carte et de ceux se trouvant sur son terminal de lecture. La carte dispose donc de moyens de communication avec le terminal qui sont constitués soit par des contacts électriques, soit par une interface électromagnétique en ce qui concerne les cartes sans contact.

Le système de développement selon l'invention se compose globalement d'une carte de référence connectée à une station de travail constituée par un ordinateur personnel. Ce dernier est équipé de logiciels appropriés servant à la mise au point d'applications "carte" et d'une interface permettant une communication bidirectionnelle entre les logiciels de la carte et ceux de la station. De plus un équipement mobile connecté à l'ordinateur personnel permet de commander et d'exécuter l'application comme si elle était chargée dans la carte et cette dernière insérée dans l'équipement mobile.

L'invention sera mieux comprise grâce à la description détaillée qui va suivre et qui se réfère aux figures annexées données à titre d'exemple nullement limitatif.

### Brève description des figures

La figure 1 illustre un schéma bloc d'un système de développement d'application pour une carte à puce.
La figure 2 illustre le cheminement d'une commande générique, provenant de l'équipement mobile, ainsi que celui de sa réponse dans le schéma bloc du système de développement
La figure 3 illustre le cheminement d'une commande système, provenant de l'équipement mobile, ainsi que celui de sa réponse dans le schéma bloc du système de développement
La figure 4 illustre le cheminement d'une commande particulière destinée à l'une des applications, provenant de l'équipement mobile, ainsi que celui de sa réponse dans le schéma bloc du système de développement

### Description détaillée d'un mode préféré de réalisation de l'invention

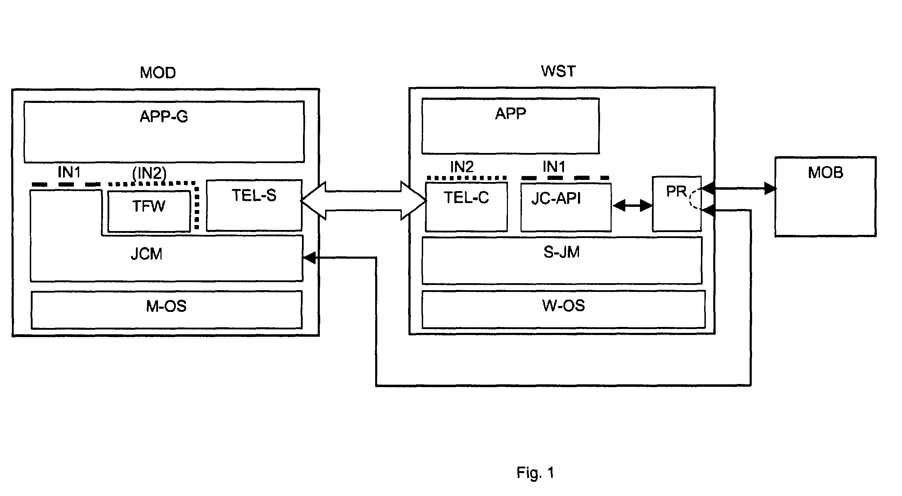

Le système de développement, dans une configuration préférentielle, permet de programmer des applications pour cartes à puce du type "Java Card" dont l'architecture logicielle de base est représentée dans le bloc désigné par (MOD) dans la figure 1.

Dans cet exemple ces cartes sont utilisées dans le domaine des télécommunications mobiles ou de la téléphonie mobile. Elles sont connues sous l'appellation "carte SIM" (Subscriber Identity Module) et elles constituent l'élément central de la sécurité des équipements ou téléphones mobiles. Hormis les cartes SIM pour réseaux GMTS (Global Mobile Telecommunication System), le système de développement selon l'invention peut aussi s'utiliser avec d'autre cartes de télécommunication comme par exemple les cartes USIM (Universal Subscriber Identity Module) pour les réseaux UMTS (Universal Mobile Telecommunications System), UICC (Universal Integrated Circuits Card) carte multi-applications etc.

Comme, ces cartes nécessitent une intelligence de plus en plus grande avec le développement croissant de nouveaux services accessibles aux utilisateurs d'équipements mobiles tel que des paiements, la consultation de données à accès contrôlé, réservations, etc. il devient nécessaire de disposer un système permettant un développement rapide et efficace d'applications.

La mise en oeuvre d'un service donné sur un équipement mobile nécessite une application logicielle particulière qui sera implémentée sur la carte SIM et/ou dans l'équipement mobile lui-même. Ce dernier est équipé d'un ensemble de logiciels universels conçu pour assurer le fonctionnement de ses différents éléments et pour gérer son environnement (connexion au réseau mobile, interface utilisateur, pilotes de périphériques additionnels etc). Selon le type d'application, trois cas peuvent se présenter:
a) l'application est entièrement contenue dans la carte SIM, ce qui rend son fonctionnement indépendant de l'équipement mobile dans lequel elle est insérée. Elle est ainsi transportable d'un équipement mobile à un autre sans dégradation des fonctionnalités des applications qui y sont stockées.
b) la carte SIM contient une partie de l'application tandis que l'autre partie est stockée dans une mémoire de l'équipement mobile. Si la carte est transférée dans un autre équipement mobile, celui-ci n'utilisera que les fonctions standards de la carte tandis que les fonctions relatives à l'application ne pourraient pas être activées.
c) l'application est entièrement contenue dans la mémoire de l'équipement mobile et son exécution peut s'effectuer sans la carte SIM comme par exemple des jeux, un réveil, un annuaire etc. Dans ce cas, la carte SIM ne sert que pour la connexion et l'identification de l'équipement mobile sur le réseau.

Le module (MOD) de référence de la figure 1 correspond à une carte du type SIM spéciale dite de développement servant de support aux logiciels protégés accessibles avec la station de travail (WST). Cette carte contient les modules logiciels protégés dont les fonctionnalités sont accessibles à un système extérieur via des interfaces comme décrit ci-après.

Le logiciel d'une carte SIM Java comprend un module logiciel de base aussi appelé OS Java Card, composé d'un système d'exploitation M-OS sur lequel est installé une machine Java Card (JCM) (Java Card Machine). Sur ce module de base qui se trouve sur toutes les cartes du type Java est installé un module spécifique (TFW) (Telecom Framework) qui définit cette carte Java comme étant une carte SIM destinée à recevoir des applications liées aux télécommunications mobiles. Un module (TEL-S) (appelé aussi Telecom Wrapper) joue un rôle de serveur pour la station de travail (WST) constituée par un ordinateur personnel. Ce module serveur (TEL-S) met à disposition du logiciel de développement installé dans la station de travail (WST) des fonctions spécifiques aux télécommunications extraites du module (TFW). La partie (APP-G) correspond à une image de l'application (APP) en cours de développement sur la station de travail (WST).

La ligne traitillée entre le module de traitement (JCM) et l'image de l'application (APP-G) représente une interface (IN1) reliant l'application (APP-G) à la machine Java Card (JCM). Une autre interface (IN2) est représentée par une ligne pointillée d'une part entre le module spécifique (TFW) et la machine (APP-G) et d'autre part entre ce même module (TFW) et le module serveur (TEL-S).

Ces interfaces (IN1), (IN2), jouant en quelque sorte un rôle de filtre, offrent un accès qui se limite aux fonctions et commandes nécessaires à la création d'applications et à leur fonctionnement une fois installées dans la carte SIM. Un accès au code source des logiciels tiers protégés tels que la machine (JCM) et le module (TFW) est ainsi interdit.

La station de travail (WST) comporte aussi un module logiciel de base composé d'un système d'exploitation W-OS (par exemple MS-Windows, Linux ou Mac-OS) sur lequel est installé une machine virtuelle Java Standard S-JM (Standard Java Machine). Sur cet ensemble de base est installée une librairie (JC-API) (Java Card Application Programming Interface) fournissant l'interface propre à une carte Java (API Application Programming Interface) à l'environnement de développement. La station de travail (WST) dialogue avec la carte SIM de développement grâce au module client (TEL-C) dépendant du module serveur (TEL-S) de la carte (MOD). A la différence de la carte SIM, le module de base (W-OS, S-JM) avec la librairie logicielle (JC-API) ne sont pas protégés et donc libres d'accès dans les limites usuelles des logiciels pour ordinateur personnel.

Le système selon l'invention comprend en outre un équipement mobile (MOB), par exemple un téléphone mobile, connecté à la station de travail (WST) via un module d'interface "proxy" (PR). Cet équipement mobile (MOB) peut aussi être remplacé par un logiciel de simulation installé dans la station de travail (WST). Le module "proxy" (PR) dialogue d'une part avec la machine (JCM) de la carte (MOD) et d'autre part avec la librairie (JC-API) de la station de travail (WST).

L'activation de l'interface utilisateur de l'équipement mobile, par exemple au moyen de touches du clavier, permet de générer des commandes permettant le fonctionnement de l'application (APP). Des commandes peuvent aussi être transmises par un opérateur au moyen de messages courts SMS (Short Message Service). Elles peuvent soit exécuter des applications installées dans la carte SIM et/ou dans l'équipement mobile, soit permettre l'installation, la mise à jour ou la suppression desdites applications.

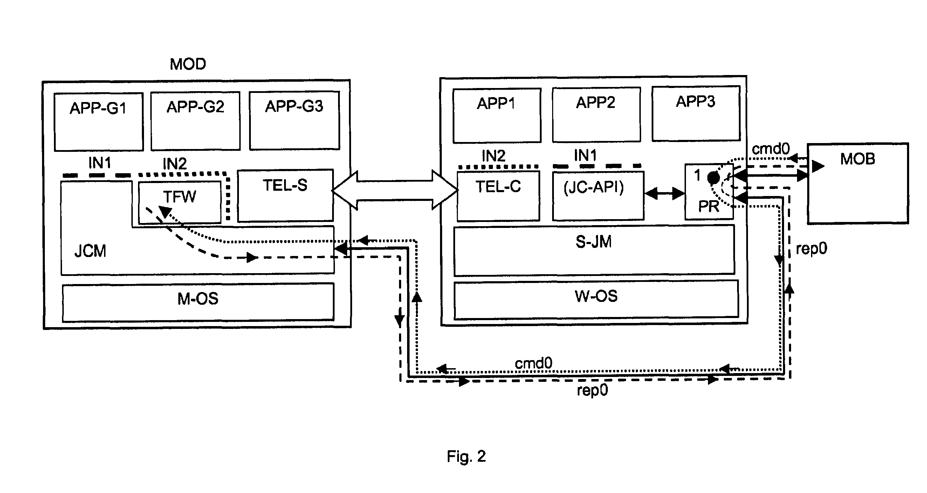

Il est à noter que plusieurs applications peuvent cohabiter indépendamment l'une de l'autre sur une même carte et sont identifiées de manière unique par un identifiant AID (Applet Identifier) selon la norme ISO 7816. Les schémas blocs des figures 2, 3 et 4 montrent un exemple où trois applications (APP1), (APP2), APP3) sont installées dans le système. La carte (MOD) contient les images correspondantes de ces trois applications (APP-G1), (APP-G2), (APP-G3).

Ces figures illustrent le fonctionnement du système selon l'invention lorsque des commandes sont envoyées depuis l'équipement mobile ou d'un simulateur d'équipement mobile. Trois catégories de commandes peuvent se présenter, à savoir des commandes dites génériques (lecture et écriture d'un fichier dans une mémoire de la carte) ou de type téléphone, des commandes système (installation, mise à jour d'applications) et des commandes particulières destinées à une application donnée, par exemple des messages courts SMS.

La figure 2 montre le cheminement d'une commande générique (cmd0) transmise par l'équipement mobile (MOB). Cette commande (cmd0) est reçue par le module proxy (PR) qui détermine le type de commande en interprétant son en-tête (point 1 dans le bloc (PR). Dans ce cas, le module proxy (PR) reconnaît une commande générique, c'est-à-dire une commande qui ne se rapporte pas à une application particulière, comme par exemple une commande de lecture ou d'écriture d'un fichier dans la carte (MOB). La commande (cmd0) est acheminée directement vers le module spécifique (TFW) de la carte (MOD) qui se charge de son exécution. La réponse (rep0) est ensuite retournée par le même chemin au module proxy (PR) qui la transmet à l'équipement mobile (MOB).

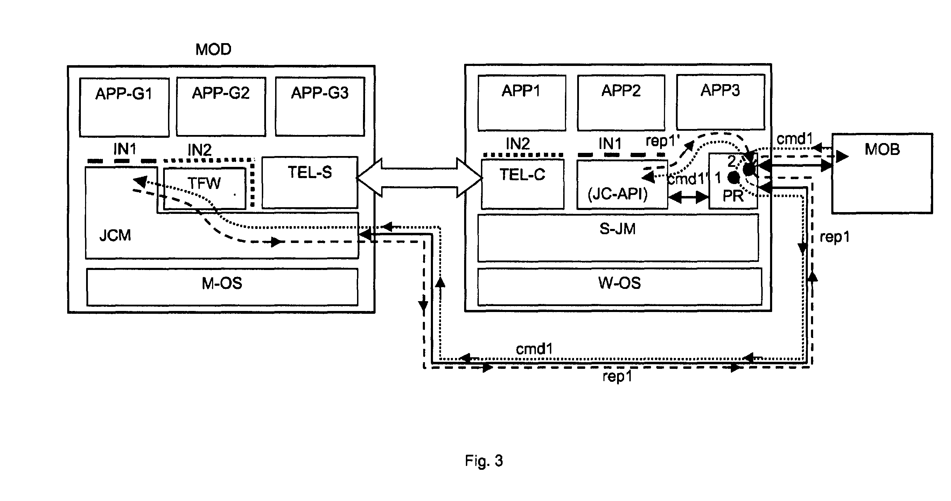

La figure 3 montre le parcours d'une commande système (cmd1) transmise par l'équipement mobile (MOB) puis reçue par le module proxy (PR). Ce dernier analyse la commande (cmd1) et reconnaît une commande système (point 1). Elle est ensuite acheminée au module spécifique (TFW) qui utilise les ressources de la machine (JCM) de la carte (MOD) pour son exécution. La machine (JCM) retourne une réponse (rep1) au module proxy (PR) qui l'analyse (point 2). Si la réponse (rep1) est correcte, le module proxy (PR) envoie une commande (cmd1') à la librairie (JC-API) qui retourne une réponse (rep1'). Cette réponse (rep1') est également analysée par le module proxy (PR). Si cette réponse (rep1') est correcte le module proxy (PR) la transmet à l'équipement mobile (MOB). En cas de réponse (rep1') incorrecte, l'équipement mobile (MOB) reçoit un message d'erreur.

Lorsque la réponse (rep1) retournée par la machine (JCM) se révèle être incorrecte après l'analyse par le module proxy (PR) au point 2, celui-ci retourne directement un message d'erreur à l'équipement mobile (MOB).

Ainsi, une erreur au niveau de la carte (MOB) traduite par une réponse (rep1) incorrecte de la part de la machine (JCM) et une erreur au niveau de la station de travail WST qui aboutit à une réponse (rep1') incorrecte envoyée par la librairie (JC-API) donnent toutes les deux un message d'erreur à l'équipement mobile (MOB).

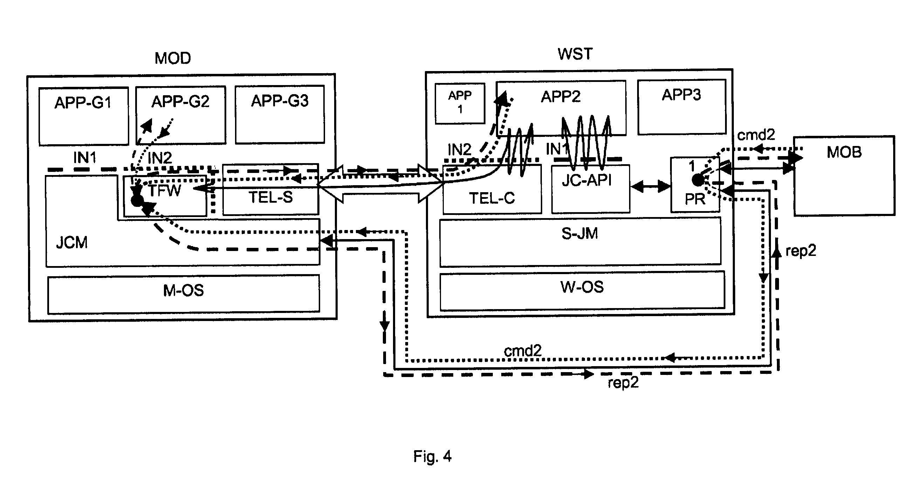

La figure 4 montre le cheminement d'une commande (cmd2) adressée à une application particulière, par exemple (APP2). Dans une première étape, le module proxy (PR) détermine le type de commande, ici il s'agit d'une commande destinée à l'application (APP2). Cette commande (cmd2) est ensuite acheminée au module spécifique (TFW) de la carte (MOD) qui va activer l'application (APP2).

Le module (TFW) ne peut ni exécuter la commande ni transmettre directement la réponse comme dans le premier cas d'une commande générique car elle doit disposer de données provenant de l'application (APP2) et de son image (APP-G2) sur la carte (MOD). Par conséquent, la commande (cmd2) est transmise par le module spécifique (TFW) d'une part à l'image de l'application (APP-G2) de la carte (MOD) et d'autre part à l'application (APP2) de la station de travail (WST). Dans la carte, cette communication est effectuée directement vers l'image (APP-G2) en utilisant l'interface (IN2) du module spécifique (TFW), tandis que vers l'application (APP) de la station de travail (WST), elle est effectuée à travers les modules serveur (TEL-S) et client (TEL-C), (lignes pointillées et traitillée dans la figure 4).

La commande est ensuite exécutée par l'application (APP2) en utilisant l'interface (IN1) fournie par la librairie (JC-API) et en utilisant l'interface (IN2) fournie par les modules client (TEL-C) et serveur (TEL-S) autant de fois qu'il est nécessaire, ce qui est symbolisé par les doubles flèches en zig-zag entre les bloc (APP2) et le bloc (JC-API) et entre les blocs (APP2) et (TEL-C), (TEL-S), (TFW). Lorsque l'exécution de l'application (APP2) est terminée, le module spécifique (TFW) transmet une réponse (rep2) au module proxy (PR) qui la retransmet à l'équipement mobile (MOB).

La carte (MOD) de développement constitue un dispositif de sécurité ou "dongle" ou encore une clé électronique pour l'environnement de développement. Autrement dit, le développement d'une application Java pour carte SIM ne peut pas s'effectuer sans la présence de cette carte connectée à l'ordinateur sur lequel sont installés les outils de développement de logiciels. La carte sert également de licence au système de développement car l'intelligence dudit système est concentrée dans la carte et non pas dans la station de travail qui contient des logiciels standards mis à part le module client (TEL-C). La maintenance d'un tel système est ainsi réduite car une mise à jour par exemple consisterait essentiellement à changer la carte (MOD).

Dans la station de travail (WST), l'interface (IN1) est mise à disposition de l'application (APP) par la machine standard S-JM à travers la librairie (JC-API), tandis que dans la carte (MOD), cette même interface (IN1), utilisée par l'application (APP-G) (image de (APP), est fournie par la machine Java Card (JCM).

Une application (APP) Java Card, aussi appelée applet, programmée à l'aide des outils chargé dans la station de travail (WST) utilise l'interface (IN2) fourni par le module client (TEL-C). Elle communique avec le module spécifique (TFW) de la carte (MOD) de la même manière que si elle était chargée à la place de l'image (APP-G) dans la carte (MOD). En effet, l'interface (IN2) du module (TFW) est fournie au module client (TEL-C) au travers du module serveur (TEL-S) de la carte (MOD).

Avec cette configuration, le comportement de l'application (APP) de la station de travail (WST) sera le même que celui qu'elle aurait si elle était chargée dans la carte (MOD) à la place de l'image (APP-G) de ladite application.

La machine Java Card (JCM) et le module spécifique (TFW) de la carte (MOD) sont ainsi préservés car ils ne sont pas chargés dans la station de travail (WST), l'application (APP) n'utilisant que les commandes et les fonctions fournies par les interfaces (IN1) et (IN2).

Une application (APP) dont le développement est achevé peut être chargée sur la carte par l'utilisateur, par exemple par téléchargement depuis le réseau mobile dans le cas d'une carte SIM. L'application ainsi fournie par le prestataire de service sera installée dans la carte à l'emplacement de l'image (APP-G) comme prévu lors de son développement dans la station de travail (WST). L'application (APP) fonctionnera alors dans la carte, dans les conditions définies par les interfaces (IN1) et (IN2), aussi bien que si elle s'exécutait dans l'environnement de développement de la station de travail (WST).

Le système de développement ou émulateur selon l'invention est constitué finalement d'une carte (MOD) Java du type SIM comprenant un système d'exploitation M-OS, d'une machine Java Card (JCM), d'une image d'une application Java (APP-G), d'un module spécifique (TFW) au domaine de l'application (par exemple les télécommunications) et d'un module serveur (TEL-S). L'ensemble comprenant le module client (TEL-C), la librairie (JC-API) et le module proxy (PR) peut être intégré dans les outils de développement de carte Java tel que Eclipse de IBM ou Java Studio de Sun Micro Systems installés dans un ordinateur personnel. Le système se complète d'un équipement mobile (MOB) chargé d'envoyer des commandes au module proxy (PR).

L'avantage principal de cet émulateur est qu'il est indépendant de l'environnement de développement et du système d'exploitation de la station de travail.

Selon une variante de la configuration de l'émulateur, les modules serveur et client (TEL-S), (TEL-C) peuvent être appairés au moyen d'adresses spécifiques et du cryptage des données échangées entre eux. Cet appariement serait analogue à celui bien connu que l'on rencontre dans les réseaux locaux d'ordinateurs LAN ou WLAN où toutes les stations (clients), dûment répertoriées par leur adresse réseau IP (Internet Protocol) et/ou leur adresse physique MAC (Media Access Control), ont un accès au serveur contrôlé et sécurisé. L'avantage de cette variante serait donc de limiter les possibilités de connexion d'une carte (MOD) à une seule station de travail (WST) ou à un groupe de stations prédéterminé.

## Revendications

1. Système de développement d'une application (APP) destinée à être embarquée dans un module, comprenant un module (MOD) de référence et une station de travail (WST), ledit module (MOD) de référence comprend un ensemble logiciel de base (JCM), un module logiciel (TFW) spécifique au domaine de l'application (APP) et des interfaces (IN1), (IN2) reliant une image (APP-G) de l'application d'une part à l'ensemble logiciel de base (JCM) et d'autre part au module logiciel spécifique (TFW), la station de travail (WST) comprend un logiciel de base (S-JM) universel dialoguant avec l'application (APP) via une interface (IN1) fournie par une librairie logicielle (JC-API), ledit système est **caractérisé en ce que** le module (MOD) comporte un module serveur (TEL-S) reliant le module logiciel spécifique (TFW) à un module client (TEL-C) de la station de travail (WST), ledit module logiciel spécifique (TFW) fournissant une interface (IN2) à l'application (APP) de la station de travail (WST) via le module serveur (TEL-S) et le module client (TEL-C) et **en ce qu'**il comprend un équipement mobile (MOB) connecté à la station de travail (WST) via un module d'interface "proxy" (PR) connecté d'une part au logiciel de base (JCM) du module (MOD) et d'autre part à la librairie logicielle (JC-API) de la station de travail (WST), ladite librairie (JC-API) fournissant des fonctions propres au module (MOD) à l'application (APP).

2. Système selon la revendication 1 **caractérisé en ce que** le module d'interface "proxy" (PR) gère et analyse d'une part les commandes transmises par l'équipement mobile (MOB) et d'autre part les réponses fournies par le système destinées audit équipement mobile.

3. Système selon la revendication 2 **caractérisé en ce que** l'équipement mobile (MOB) est remplacé par un logiciel de simulation installé dans la station de travail (WST).

4. Système selon la revendication 1 **caractérisé en ce que** le logiciel de base (JCM) du module (MOD) est constitué par une machine virtuelle Java Card.

5. Système selon la revendication 1 **caractérisé en ce que** le module spécifique (TFW) du module (MOD) comprend des fonctions propres aux télécommunications.

6. Système selon la revendication 1 **caractérisé en ce que** le logiciel de base de la station de travail (WST) consiste en une machine virtuelle Java Standard et **en ce que** la librairie (JC-API) consiste en une librairie Java Card fournissant une interface propre à une carte Java à un environnement de développement installé dans ladite station de travail (WST).

7. Système selon les revendications 1 à 6 **caractérisé en ce que** l'interface (IN1) fournie par la librairie (JC-API) à l'application (APP) de la station de travail (WST) est équivalente à celle fournie par la machine (JCM) du module (MOD) à l'image (APP-G) de ladite application (APP).

8. Système selon les revendications 1 à 7, **caractérisé en ce que** le module (MOD) consiste en une carte à puce du type carte Java, la station de travail (WST) en un ordinateur personnel connecté à la carte à puce via les modules serveur et client (TEL-S), (TEL-C) respectivement de ladite carte et de ladite station de travail et l'équipement mobile (MOB) en un téléphone portable.

9. Système selon les revendications 1 à 8 **caractérisé en ce que** l'application (APP) de la station de travail (WST) échange des données avec la carte (MOD) via les modules serveur et client (TEL-S), (TEL-C) en utilisant la même interface (IN2) avec le module spécifique (TFW) que si cette application (APP) était installée dans la carte (MOD) à la place de l'image (APP-G).

10. Système selon la revendication 9 **caractérisé en ce que** le comportement de l'application (APP) chargée dans la station de travail (WST) est le même que celui qu'elle aurait lorsqu'elle sera chargée dans la carte (MOD) à la place de l'image (APP-G) de ladite application.

11. Système selon la revendication 1 **caractérisé en ce que** le module serveur (TEL-S) est appairé au module client (TEL-C) au moyen d'une adresse spécifique et du cryptage des données échangées entre lesdits modules limitant ainsi les possibilités de connexions du module (MOD) à une seule station de travail (WST) ou à un groupe de stations prédéterminé.
